# EUROPEAN PATENT SPECIFICATION

(11) **EP 0 904 771 B1**
(45) Date of publication and mention of the grant of the patent: **18.06.2003**
(21) Application number: 98116128.4
(22) Date of filing: 26.08.1998
(51) Int. Cl.: A61K 7/46, A01N 25/18

(54) **Slow-release gel composition for volatile substance**
Langsam abgebende Gelzusammensetzung für flüchtige Substanzen
Composition gel à libération lente pour des substances volatiles

(30) Priority: 29.08.1997 JP 23449297
(43) Date of publication of application: 31.03.1999
(73) Proprietor: SHOWA DENKO KABUSHIKIKAISHA, Tokyo-to (JP)
(72) Inventor: Wada, Tetsuo, Showa Denko K.K., Kawasaki Res. Lab., Kawasaki-shi, Kanagawa-ken (JP); Yamaguchi,Tetsuhiko, Showa Denko K.K., Kawasaki, Kawasaki-shi, Kanagawa-ken (JP)
(74) Representative: Strehl Schübel-Hopf & Partner

(56) References cited:
- US-A- 4 668 434
- DATABASE WPI Section Ch, Week 8948 Derwent Publications Ltd., London, GB; Class A11, AN 89-353755 XP002900212 & JP 01 265965 A (KANPE KATEI TORYO K) , 24 October 1989
- DATABASE WPI Section Ch, Week 9106 Derwent Publications Ltd., London, GB; Class A14, AN 91-041128 XP002900213 & JP 02 308884 A (TAKASAGO PERFUMERY CO LTD), 21 December 1990

## Description

### BACKGROUND OF THE INVENTION

### Field of the Invention

The present invention relates to a slow-release gel composition for a volatile substance used in public facilities such as hospital, indoor facilities such as housing, toilet, dressing room, shoe box, chest of drawers, closet, garret and underfloor part, vehicles such as car, train and airplane, and outdoor facilities such as garden, rooftop, street, garbage pit, compost box, orchard and hothouse.

This application is based on patent application No. Hei 9-234492 filed in Japan and provisional patent application Serial No. 60/077099 filed in U.S.

### Description of Related Art

Conventionally, perfume, deodorants, insectifuges, pesticides, repellents and the like are a liquid product in many cases and accordingly, these are held in a bottle and on use, the bottle is opened so that the volatile substance as an active ingredient can evaporate or the liquid can be sprayed or atomized. However, when the liquid product held in a bottle in the open state is left standing, the bottle may fall down to cause contamination in the surrounding and in the case of spraying, the spraying takes a long time and the effect disadvantageously does not continue. In order to solve these problems, a method of adsorbing a volatile substance to an inorganic porous carrier such as silica or to a spongy resin carrier and a method of kneading a volatile substance into a resin have been developed. By using these methods, the problem of splashing of the contents on falling down of the container is solved. However, according to these methods, even when the volatile substance decreases by the evaporation, the volume of the carrier or resin itself does not change and the appearance is the same as that at the initiation of use, therefore, the degree of reduction in the effect or the time for exchange is difficult to determine. Furthermore, since the volatile substance evaporates from the surface of the carrier or the like and the volume of the carrier does not change, the surface is dried and a problem arises with respect to the duration of the slow-release capability with the passage of time.

In recent years, as a technique for solving the defects of these conventional methods, a method of using a gel composition has been developed. This is a method of using a gel composition prepared by using a substance capable of absorbing and gelling a volatile substance or a solution containing a volatile substance. In this case, the volume of the gel decreases accompanying the reduction of the volatile substance by evaporation, accordingly, the degree of reduction in the effect or the time for exchange can be known at a glance and moreover, the slow-release of the volatile substance can continue.

Conventional transparent or opaque gel compositions in general use a natural polymer compound such as carrageenan, sodium alginate, gellan gum, agar, gelatin and chitosan, or a synthetic polymer compound such as urethane-base compounds, vinyl alcohol-base compound and acryl-base compound, as the gelling agent.

However, the natural polymer compound such as carrageenan and agar is once dissolved under heating at a high temperature and gelled under cooling to form a gel composition and since the gelation temperature is high, for example, in the case of use as a gel fragrance, the perfume as the volatile substance must be added at a temperature higher than the gelation temperature. As a result, a part of the perfume ingredient volatilizes to present a balance different from the original perfume ingredient, which gives rise to a problem of uncomfortable feeling not favorable to the fragrance. Further, another ingredient must be added for preventing the syneresis or improving the strength of the gel, which in turn raises a problem of a decrease of the transparency. Furthermore, a solution containing a large amount of a surfactant or a volatile ingredient solubilizing agent such as alcohol, is deficient in that when the solution is gelled, the gel strength is reduced or the solution cannot be gelled. Therefore, a problem is present that a solution containing a volatile ingredient in a high concentration cannot be gelled. In the uses having probability that the gel composition temperature reaches 50°C or higher, such as a fragrance for automobiles or the like or an insectifuge, pesticide or repellant used outdoors under direct sunlight, the gel strength is disadvantageously reduced to cause syneresis. Also, deterioration due to putrefaction with the passage of time, generation of mold and a problem in view of weather resistance still remain to be solved. The term "syneresis" as used herein means that liquid is absorbed in the gel and exudes out on the surface of the gel or between the gel and the container. If the amount of the syneresis is large, the liquid may disadvantageously flow out to contaminate the surrounding.

Japanese Patent 2,562,913 discloses a gel composition using a natural polysaccharide such as gellan gum as the gelling agent. This gelling agent has a low gelation temperature as compared with agar and therefore, the volatile ingredient can be added at a low temperature. However, this gelling agent must be heated at 90°C or higher for dissolving and the operation is cumbersome such that the volatile substance is added after cooling the solution to about 50°C. Further, this gelling agent is a natural composition and therefore, has a problem of putrefaction.

On the other hand, the urethane-base, vinyl alcohol-base or acryl-base synthetic polymer compound is deficient in that the gel is inferior in the shape holding stability or durability, is readily attacked by the perfume ingredient and has insufficient transparency. For example, JP-A-6-206811 (the term "JP-A" as used herein means an "unexamined published Japanese patent application") discloses a method of reacting an isobutylene/maleic anhydride with a cross-linking agent to prepare a water absorbent in the container and produce a gel fragrance to which a perfume is incorporated. However, since it is a carboxylic acid-base compound, the capability of absorbing the perfume ingredient and the water retention stability are not necessarily satisfied and a syneresis phenomenon may disadvantageously take place with the passage of time. JP-A-9-66095 discloses a gel fragrance using a cationic thickener, but this has a problem that since the thickener is cationic, when the volatile substance, surfactant or additive used is anionic or cationic, the effect or the slow-release property is inhibited.

JP-A-7-75666 discloses a gel fragrance prepared by letting a hydrophobic silica particle carry a perfume and dispersing the particles in a gel so as to overcome the defect of conventional gelling agents that the amount of the volatile substance contained is limited, however, this is deficient in the transparency and poor in the design aspect.

### SUMMARY OF THE INVENTION

As a result of extensive studies to solve the above-described problems, the present invention provides a slow-release gel composition for a volatile substance, which is advantageous in that the gel composition can be prepared at room temperature, a solution containing a surfactant for dispersing and solubilizing a volatile substance and, if desired, an alcohol can be gelled by liquid absorption and the gel composition has excellent light stability.

The present invention relates to the following matters:
1) A slow-release gel composition for a volatile substance, comprising a volatile substance, a poly-N-vinylcarboxylic acid amide-base cross-linked resin, a surfactant and water.
2) A slow-release gel composition for a volatile substance as described in 1 above, which further contains an alcohol.
3) A slow-release gel composition for a volatile substance as described in 1 to 2 above, wherein the poly-N-vinylcarboxylic acid amide-base cross-linked resin is selected from the group consisting of poly-N-vinylformamide-base cross-linked resins, poly-N-vinylacetamide-base cross-linked resins, poly-N-vinyl-N-methylacetamide-base cross-linked resins and poly-N-vinyl-α-pyrrolidone-base cross-linked resins.
4) A slow-release gel composition for a volatile substance as described in 3 above, wherein the poly-N-vinylcarboxylic acid amide-base cross-linked resin is a poly-N-vinylacetamide-base cross-linked resin.
5) A slow-release gel composition for a volatile substance as described in 4 above, wherein the poly-N-vinylcarboxylic acid amide-base cross-linked resin is a cross-linked N-vinylacetamide homopolymer.
6) A slow-release gel composition for a volatile substance as described in 1 to 5 above, wherein the volatile substance is selected from the group consisting of perfumes, deodorants, insectifuges, pesticides and repellents.
7) A slow-release gel composition for a volatile substance as described in 1 to 6 above, which comprises from 0.1 to 40% by weight of a volatile substance, from 1 to 10% by weight of a poly-Npoly-N-vinylcarboxylic acid-base cross-linked resin, from 0.1 to 15% by weight of a surfactant, from 15 to 98.8% by weight of water and from 0 to 60% by weight of an alcohol.

A slow-release gel composition for a volatile substance is provided, comprising a volatile substance, a poly-N-vinylcarboxylic acid amide-base cross-linked resin, a surfactant, water and, if desired, an alcohol. This gel composition can be manufactured at room temperature and the poly-N-vinylcarboxylic acid amide-base cross-linked resin can gel by liquid absorption a solution containing a surfactant for dispersing and solubilizing the volatile substance and, if desired, an alcohol. Accordingly, a gel composition having excellent light stability and capable of slow release of the volatile substance can be provided.

### DESCRIPTION OF THE PREFERRED EMBODIMENTS

The poly-N-vinylcarboxylic acid amide-base cross-linked resin for use in the present invention may be obtained by polymerizing an N-vinylcarboxylic acid amide alone such as N-vinylformamide, N-vinylacetamide, N-vinyl-N-methylacetamide or N-vinyl-α-pyrrolidone, or polymerizing the N-vinylcarboxylic acid amide with monomer copolymerizable therewith in the presence of a cross-linking agent having two or more polymerizable double bonds. A poly-N-vinylacetamide-base cross-linked resin is preferred in view of aging stability and alcohol absorption capability, a cross-linked N-vinylacetamide homopolymer is more preferred.

Examples of the monomer copolymerized with the N-vinylcarboxylic acid amide include (meth)acrylic acid-base monomers such as (meth)acrylic acid (and alkali metal salt or ammonium salt thereof), methyl (meth)acrylate, isopropyl (meth)acrylate, butyl (meth)acrylate, octyl (meth)acrylate, 2-ethylhexyl (meth)acrylate, methoxyethyl (meth)acrylate, 2-hydroxyethyl (meth)acrylate, 2-hydroxypropyl (meth)acrylate and polyoxyalkylene glycol mono(meth)acrylate;
(meth)acrylamide-base monomers such as (meth)acrylamide, N,N-dimethyl(meth)acrylamide, N,N-diethyl(meth)acrylamide, N-methylol(meth)acrylamide, (meth)acrylamide-2-methylsulfonic acid (and an alkali metal salt or ammonium salt thereof) and N-isopropyl (meth)acrylamide;
vinyl ester-base monomers such as vinyl acetate, vinyl butyrate and vinyl valerate;
styrene-base monomers such as styrene, α-methylstyrene, *p*-methylstyrene, *p*-methoxystyrene, *m*-chlorostyrene and vinylpyridine;
vinyl ether-base monomers such as methyl vinyl ether, butyl vinyl ether and vinyl benzyl ether;
dicarboxylic acid-base monomers such as maleic anhydride, maleic acid (and alkali metal salt or ammonium salt thereof), fumaric acid (and alkali metal salt or ammonium salt thereof), maleic acid dimethyl ester and fumaric acid diethyl ester;
allyl-base monomers such as allyl alcohol, allyl phenyl ether and allyl acetate; and
monomers such as (meth)acrylonitrile, vinyl chloride, vinylpyrrolidone and N-vinylimidazole.

Amines used for the ammonium salt include ammonia, alkylamines such as triethylamine, diethylamine and dibutylmonomethylamine, OH group-containing organic amines such as monoethanolamine, diethanolamine, triethanolamine, monoisopropanolamine, N-methylethanolamine and dimethylaminopropanolamine, and cyclic organic amines such as morpholine.

Two or more of the above-described monomers may be copolymerized in combination.

The ratio of the copolymerizable monomer used is suitably in a range of not impairing the object and capability of the present invention and it is generally 60% by weight or less, preferably 40% by weight or less.

By using a poly-N-vinylcarboxylic acid amide-base cross-linked resin, even a solution containing a surfactant for dispersing and solubilizing a volatile substance and, if desired, an alcohol can be easily gelled by liquid absorption. Further, since the poly-N-vinylcarboxylic acid amide-base cross-linked resin can effect liquid absorption for various solutions at room temperature, the gel composition can be prepared at room temperature and the volatile substance can be prevented from being evaporating during preparation of the gel composition. Furthermore, the composition gelled has good transparency and excellent light stability and difficultly undergoes reduction in the capability such as syneresis, with the passage of time during storage or use for a long period of time. Moreover, the slow-release gel composition for a volatile substance according to the present invention does not easily release the solution once absorbed even when the freezing and fusion are repeated and therefore, is useful for use of the slow-release gel composition for a volatile substance particularly in a cold area.

The addition amount of the poly-N-vinylcarboxylic acid amide-base cross-linked resin varies depending on the hardness required for the slow-release gel composition for a volatile substance, but it is generally from 1 to 10% by weight, preferably from 2 to 7% by weight. If the amount added is less than 1% by weight, syneresis from the gel occurs with the passage of time, whereas if it exceeds 10% by weight, the gel is excessively hard to give bad workability on filling the composition into a container and the amount of residue after the volatile substance is used and volatilized disadvantageously increases. The cross-linked resin used generally has a size of from 0.1 µm to 10 mm and a shape of powder, grain, granule, pellet, bead, die, bar or sheet, but these are appropriately selected depending on the use purpose and design of the slow-release gel composition for a volatile substance.

The poly-N-vinylcarboxylic acid amide-base cross-linked resin is produced by using a known method, for example, the aqueous solution polymerization method, the reversed phase suspension polymerization method and the precipitation deposition polymerization method.

The volatile substance for use in the present invention is a substance capable of transpiration at room temperature, such as perfume, deodorant, insectifuge, pesticide and repellent, and one or more thereof are used. The amount of the volatile substance used may be appropriately selected depending on the kind, use end and form of the slow-release gel composition for a volatile substance, but it is generally from 0.1 to 40% by weight, preferably from 0.5 to 30% by weight, based on the entire amount. If the amount used is less than 0.1% by weight, the amount of the volatile substance volatilized is small and therefore, the objective function of the volatile substance-containing composition cannot be brought out, whereas if it exceeds 40% by weight, the gel state is deteriorated and further, the volatile substance fails to have slow-release capability and excessively volatilizes, as a result, the effect is disadvantageously too much intensified. In the case of the slow-release gel composition for a volatile substance according to the present invention, the amount of the volatile substance contained can be greatly increased without impairing various physical properties of the gel as compared with the case of using a conventional gelling agent. Accordingly, a volatile substance-containing gel composition having a high concentration can be produced and in turn, a product more reduced in the size while having capability equal to that of the conventional slow-release gel composition for a volatile substance can be manufactured.

Examples of the perfume for use in the present invention as the volatile substance include citrus flavors such as orange, lemon, lime and grapefruit; a flavor of fruits such as pineapple, banana, apple, apricot, berry, cherry and peach; a flavor for food, such as coconut, vanilla and mint; a flavor of flowers such as rose, jasmine, fragrant olive, gardenia, lily of the valley, sweet pea, lilac, freesia, hyacinth and cyclamen; hydrocarbons such as limonene, α-pinene, β-pinene, *p*-cymene, γ-terpinene, 3-carene, myrcene, ocimene, *p*-menthane and 1-*p*-menthene; alcohols and alcohol esters thereof, such as linalool, citronellol, geraniol, benzyl alcohol and β-phenylethyl alcohol; perfume compounds conventionally used as the material for mixed perfumes; and mixed perfume compositions comprising an optional mixture of these flavors or compounds.

Examples of the deodorant for use as the volatile substance include plant extracted essential oil, dithio-2,2'-bis(benzomethylamide) and 1,2-benzisothiazolin-3-one.

Examples of the insectifuge for use as the volatile substance include permethrine, prothiofos, fluvalinate, fenvalerate, pyrethrin, piperonyl butoxide, camphor oil, lavender oil, capsicum extract and garlic extract.

Examples of the pesticide for use as the volatile substance include chloropicrin, dichloropropane, dichloropropylene, dichlorvos, and liquid drugs commonly used as the agricultural chemical at present.

Examples of the repellent for use as the volatile substance include repellents for vermin, cats and dogs, crows, hares and the like, such as fenvalerate, lemongrass essential oil, dry distilled wood essence and tobacco extract.

The surfactant for use in the present invention is not particularly limited as far as it can disperse and solubilize the volatile substance, and nonionic, anionic and cationic surfactants may be used. This is a very excellent property of the poly-N-vinylcarboxylic acid amide-base cross-linked resin, if considered the fact that a cationic surfactant cannot be used in the case of a natural gelling agent such as carrageenan and agar or a synthetic gelling agent such as polyacrylic acid and polymer of maleic acid, which are commonly used at present and have an anion part in the molecule, or that the anionic surfactant affects the gelling capability depending on the amount added and the use thereof is restricted.

Examples of the surfactant for use in the present invention include polyoxyethylene derivatives such as polyoxyethylene alkyl ethers, polyoxyethylene fatty acid esters, polyoxyethylene fatty acid amides and polyoxyethylene hydrogenated castor oils, polyoxyethylene polyoxypropylene copolymers, sorbitan fatty acid esters, polyoxyethylene sorbitan fatty acid esters, sorbitol derivatives, sucrose fatty acid esters, fatty acid salts, alkylsulfuric acid esters, alkylbenzenesulfonates, alkylnaphthalenesulfonates, alkylsulfosuccinates, alkyldiphenyl ether disulfonates, polyoxyethylene alkylsulfonic acid ester salts, alkylamine salts, quaternary ammonium salts, alkylbetaines, amine oxides and any mixture thereof.

The amount of the surfactant mixed is selected to be an optimal amount for solubilizing the volatile substance, but it is usually from 0.1 to 15% by weight, preferably from 0.5 to 10% by weight, based on the entire amount of the gel composition. If the amount mixed exceeds 15% by weight, volatilization of the volatile substance from the gel composition is disadvantageously inhibited.

The amount of water mixed in the slow-release gel composition for a volatile substance of the present invention may be appropriately selected according to the form on use of the slow-release gel composition for a volatile substance and it is preferably from 15 to 98.8% by weight, more preferably from 30 to 97% by weight, based on the entire amount of the gel composition. If the amount is less than 15% by weight, the appearance is deteriorated such as reduction in the transparency of the gel composition, whereas if it exceeds 98.8% by weight, good gel state cannot be obtained due to flowability of the gel.

In the present invention, an alcohol is not necessarily mixed but is preferably mixed for the purpose of freeze proofing in the severe cold season and controlling the volatilization (slow-release) rate of the volatile substance, or further for the purpose of improving the transparency of the gel. The amount of the alcohol mixed is from 0 to 60% by weight, preferably from 1 to 30% by weight, based the entire amount of the gel composition. If the amount mixed exceeds 60% by weight, the transpiration rate of the volatile substance is too high and duration of the effect cannot continue.

Examples of the alcohols for use in the present invention include methyl alcohol, ethyl alcohol, isopropyl alcohol, benzyl alcohol and 3-methyl-3-methoxybutanol, and in view of safety, ethyl alcohol is preferred. Modified alcohols having added thereto a modifier of various types, such as octaacetylated sucrose, denatonium benzoate, brucine, Flavor H-No. 1, Flavor H-No. 3, Flavor H-No. 4, Flavor H-No. 6, Flavor H-No. 9, Flavor H-No. 10, Flavor H-No. 11, Flavor H-No. 12, Flavor H-No. 13, Flavor T-No. 100 and Flavor T-No. 101, may also be used. Further, polyhydric alcohols such as ethylene glycol, diethylene glycol, triethylene glycol, propylene glycol, 1,3-butyl glycol, hexylene glycol, glycerin, sorbitol and maltitol, may be used individually or in combination.

If desired, the slow-release gel composition for a volatile substance of the present invention may contain, in addition to the above-described essential ingredients, a dye, an ultraviolet absorbent, an antiseptic, a bitter agent, a thickener, an antioxidant and a conventional gelling agent.

The dye is used for the purpose of coloring the gel composition and thereby improving the design, and examples thereof include Brilliant Blue FCF, Acid Red, Erythrosine and Sunset Yellow FCF. The ultraviolet absorbent is added when the volatile substance contained in the slow-release gel composition for a volatile substance is easy to deteriorate due to the ultraviolet ray, and examples thereof include hydroxymethoxybenzophenone, phenyl salicylate, benzotrlazole-base absorbents and cyanoacrylate-base absorbents. Examples of the antiseptic include para-hydroxybenzoic acid ester and isopropylmethylphenol, and the addition amount thereof can be greatly reduced as compared with the case of using a conventional gelling agent, because the poly-N-vinylcarboxylic amide-base cross-linked resin has excellent putrefaction resistance. The bitter agent is added to the gel composition so as to prevent wrong eating by infants and the like, and examples thereof include BITLEX (registered trademark: produced by Nagase Sangyo). The thickener is added in the conventional gelling agent formulation so as to impart appropriate elasticity to the gel, increase the gel strength and prevent syneresis, however, in the case of using a poly-N-vinylcarboxylic acid amide-base cross-linked resin, the compound itself already has gel properties of a satisfactory level and the thickener is almost not necessary to be added but if the content of the cross-linked resin in the gel composition is intended to be reduced, the thickener is effective as an auxiliary agent therefor. Examples of the thickener include natural or semisynthetic thickeners such as methyl cellulose, ethyl cellulose, hydroxypropyl cellulose, carboxymethyl cellulose, gum arabi, locust bean gum, pectin, sodium alginate, pullulan, guar gum, tamarind seed polysaccharide and xanthane gum, synthetic thickeners such as polyvinyl alcohol, sodium polyacrylate, sodium polysulfonate and polyacrylamide, and poly-N-vinylcarboxylic acid amide-base thickeners. Among these, poly-N-vinylcarboxylic acid amide-base thickeners soluble in an aqueous alcohol solution and having excellent compatibility with a surfactant and excellent fastness to light are suitably used.

The antioxidant is added mainly for the purpose of preventing oxidation deterioration of the volatile substance, and examples thereof include vitamin E, di-*t*-butyl-*p*-cresol (BHT) and butylated hydroxyanisole (BHA). Examples of conventional gelling agents include, in addition to the above-described natural and synthetic gelling agents, semisynthetic gelling agents such as starch acrylate graft polymer.

In the case of mixing these additives, the objective functions thereof can be sufficiently brought out when they are each added in an amount of approximately from 0 to 2% by weight based on the entire amount of the gel composition.

The slow-release gel composition for a volatile substance of the present invention can be produced, for example, through the following simple operation. A volatile substance is poured into water or an aqueous alcohol solution, a surfactant is added thereto in an appropriate amount and the mixture is stirred to uniformly dissolve or disperse the volatile substance. Then, poly-N-vinylcarboxylic acid amide-base cross-linked resin is poured thereinto and the mixture is stirred at room temperature for several hours or stirred at the pouring, and then left standing. The time required for the gelation varies depending on the composition of the solution, but the gelation is generally completed within from 1 to a few hours. Or, a volatile substance-containing solution (dispersion solution) is prepared and then poured into a desired product container where poly-N-vinylcarboxylic acid-base resin is previously placed, so that a gel composition in accordance with the container shape can be smoothly obtained even when the container has a complicated shape. In this case, the container can be sealed and packaged immediately after the solution is poured thereinto and since the gelation proceeds in the container, the waiting time necessary for the gelation can be dispensed with. Thus, this method is economical as compared with the former method.

The present invention is described below by referring to the Examples and Comparative Examples.

### Examples 1 to 14

Slow-release gel compositions for a volatile substance were prepared according to the mixing amount (% by weight) shown in Tables 1 and 2 below. Examples 1 to 10 are the formulation examples for the gel fragrance, Example 11 for the gel deodorant, Example 12 for the gel insectifuge, Example 13 for the gel pesticide and Example 14 for the gel repellent. Of the ingredients, the perfume (muscat, peach and vanilla flavors), insectifuge (lavender oil) and repellent (lemongrass essential oil) used were commercially available products. The surfactant used was a commercially available product by Kao Corporation. The poly-N-vinylcarboxylic acid amide-base cross-linked resin used was poly-N-vinylacetamide-base cross-linked resin "PNVA NA-010", produced by Showa Denko KK. In Example 1, PNVA NA-101 in the powder form having a particle size of from 0.2 to 0.5 mm was used, in Example 10, PNVA NA-010 in the die form of 5 mm square, and in other Examples, PNVA NA-010 in the grain form of from 1.0 to 2.5 mm.

The preparation method was such that a volatile substance was poured into water or an aqueous alcohol solution, a surfactant was added thereto in an appropriate amount, the mixture was stirred to uniformly dissolve or disperse the volatile substance, the resulting solution or dispersion solution was poured into a container having therein poly-N-vinylcarboxylic acid amide-base cross-linked resin, and the mixture was left standing at room temperature for 3 hours.

### Comparative Examples 1 to 3

Gel compositions were prepared using a commercially available natural gelling agent, gellan gum, according to the mixing amount (% by weight) shown in Table 3 below. The preparation method was such that gellan gum was added to water and the mixed solution was stirred under heating until the temperature reached 90°C or higher to completely dissolve the gellan gum. The gellan gum solution obtained was cooled to about 50°C and then, a perfume, a surfactant, ethanol and the like were added thereto. The resulting mixed solution was further stirred, thereafter allowed to cool until the temperature reached about 40°C, filled in a container, and then left standing until the temperature reached room temperature.

**Table 1**

| Ingredient | Example | | | | | | | |
|---|---|---|---|---|---|---|---|---|
| | 1 | 2 | 3 | 4 | 5 | 6 | 7 | 8 |
| Perfume | | | | | | | | |
| Muscat | 5.0 | 17.0 | 5.0 | 30.0 | 10.0 | 9.0 | 10.0 | |
| Peach | | | | | | | | 10.0 |
| Vanilla | | | | | | | | |
| Surfactant | | | | | | | | |
| EMULGBN 909 | 5.0 | 4.0 1.0 | | 2.5 | | | | 10.0 |
| EMULGEN 903 | | | | | 5.0 | | | |
| NEOPELEX F65 | | | | | | 4.0 | | |
| AMEETO 320 | | | | | | | 5.0 | |
| Ion exchange water | 87.5 | 64.7 | 44.0 | 30.0 | 40.0 | 75.0 | 80.0 | 37.5 |
| Ethanol | | | 44.9 | 30.3 | 40.0 | | | 37.5 |
| | | | | | | | | |
| PNVA NA 010 | 2.0 | 5.0 | 5.0 | 7.0 | 5.0 | 3.0 | 5.0 | 5.0 |
| | | | | | | | | |
| Glycerin | | 9.0 | | | | | | |
| PEG #400 | | | | | | | | |
| Brilliant Blue FCF | 0.01 | | | | | | | |
| Phenyl salicylate | | | 0.1 | | | | | |
| BHT | | | | 0.2 | | | | |
| Methylparaben | | 0.3 | | | | | | |
| PVNA GE-191L | | | | | | 9.0 | | |
| (Note): The numerical values of the ingredients mixed are all % by weight. PEG #400 is polyethylene glycol having an average molecular weight of 400. PNVA GE-191L is a 10% by weight aqueous solution of linear N-vinylacetamide polymer produced by Showa Denko KK and used here as a thickener. | | | | | | | | |

**Table 2**

| Ingredient | Example | | | | | |
|---|---|---|---|---|---|---|
| | 9 | 10 | 11 | 12 | 13 | 14 |
| Perfume Vanilla | 10.0 | 9.0 | | | | |
| Deodorant Dithio-2,2'-bis(benzomethyl-amide) | | | 0.3 | | | |
| Insectifuge Lavender oil | | | | 10.0 | | |
| Pesticide Chloropicrin | | | 10.0 | | | |
| Repellent Lemongrass essential oil | | | | | | 10.0 |
| Surfactant | | | | | | |
| EMULGEN 909 | 5.0 | 4.0 | 1.0 | 5.0 | 5.0 | 5.0 |
| Ion exchange water | 40.0 | 73.0 | 47.0 | 39.0 | 23.0 | 40.0 |
| Ethanol | 40.0 | | 46.7 | 39.0 | 55.0 | 40.0 |
| | | | | | | |
| | | | | | | |
| PNVA NA-010 | 5.0 | 5.0 | 5.0 | 7.0 | 7.0 | 5.0 |
| | | | | | | |
| | | | | | | |
| PEG #400 | | 9.0 | | | | |
| (Notes): The numerical values of the ingredients mixed are all % by weight. PEG #400 is polyethylene glycol having an average molecular weight of 400. | | | | | | |

### Comparative Examples 4 to 7

Gel compositions were prepared using a commercially available sodium polyacrylate (PAS)-base water absorbent (synthetic high molecular cross-linked resin) according to the mixing amount (% by weight) shown in Table 3 below. The preparation method was such that the volatile substance was poured into water or an aqueous alcohol solution and a surfactant was added thereto in an appropriate amount to thereby uniformly dissolve or disperse the volatile composition. The solution or dispersion solution obtained was poured into a container having therein a sodium polyacrylate-base water absorbent and the mixed solution was left standing at room temperature for 3 hours.

**Table 3**

| Ingredient | Comparative Example | | | | | | |
|---|---|---|---|---|---|---|---|
| | 1 | 2 | 3 | 4 | 5 | 6 | 7 |
| Perfume | | | | | | | |
| Muscat | | | 20.0 | 5.0 | 20.0 | 10.0 | 10.0 |
| Vanilla | 2.5 | 2.5 | | | | | |

| Surfactant | | | | | | | |
|---|---|---|---|---|---|---|---|
| EMULGEN 909 | 2.5 | 2.5 | 5.0 | 5.0 | 5.0 | | |
| NEOPELEX F65 | | | | | | 5.0 | |
| AMEET 320 | | | | | | | 5.0 |
| Ion exchange water | 47.5 | 69.0 | 74.0 | 42.5 | 71.0 | 82.0 | 83.5 |
| Ethanol | 46.5 | 25.0 | | 42.5 | | | |
| | | | | | | | |
| PAS-base water absorbent | | | | 5.0 | 4.0 | 3.0 | 1.5 |
| Gellan gum | 1.0 | 1.0 | 1.0 | | | | |
| (Notes): The numerical values of the ingredients mixed are all % by weight. | | | | | | | |

### Test Example

Slow-release gel compositions for a volatile substance, obtained above were examined on the state of gel at the preparation, the transparency and the aging stability (reduction in the transparency, syneresis, presence or absence of gel shrinkage) during storage under sealing. The test method is described below.

### State of Gel:

The state of gel was visually measured. The evaluation was made according to the criteria: "good gelation and no flowability of the gel" is ⓞ, "good gelation but with slight flowability" is ○, "partial gelation but with syneresis or no gelation in some solutions" is Δ and "no gelation" is ×.

### Transparency:

The transparency was visually observed. The evaluation was made according to the criteria: "good" is ⓞ, "good but with turbidity" is ○, "somewhat opaque" is Δ and "opaque" is ×.

### Syneresis:

After one-month storage indoors under sealing at room temperature in a bright place free of direct sunlight, the degree of syneresis was visually examined. The evaluation was made according to the criteria: "none" is ⓞ, "slight syneresis" is ○, "some syneresis" is Δ and "considerable syneresis" is ×.

### Shrinkage of Gel:

After one-month storage indoors under sealing at room temperature in a bright place free of direct sunlight, the shrinkage was visually examined. The evaluation was made according to the criteria: "none" is ⓞ, "slight shrinkage" is ○, "somewhat large shrinkage" is Δ and "considerably large shrinkage" is ×.

The test results are shown in Tables 4 and 5.

As apparent from Table 4, the gel compositions of Examples 1 to 14 each exhibited excellent properties in all items. On the other hand, as shown in Table 5, in the composition of Comparative Example 1, when an aqueous ethanol solution having dissolved therein a volatile substance was added to a solution having dissolved therein gellan gum and then cooled, the aqueous ethanol solution and the aqueous gellan gum solution had no compatibility and were separated and only the gellan gum part was gelled. In Comparative Examples 2 and 3, although a gel composition was obtained, the compositions were deficient in the aging stability and separation was observed. In Comparative Example 4, the sodium polyacrylate-base water absorbent had almost no liquid absorption effect on the aqueous ethanol solution and a gel composition could not be obtained. In Comparative Example 5, a gel composition was obtained but the gel had flowability and was deficient in the transparency and also bad in the aging stability. In Comparative Example 6, the solution was partly not absorbed and the portion gelled by the liquid absorption was deficient in the transparency. In Comparative Example 7, a gel composition was obtained but the gel had flowability and was bad in the aging stability.

**Table 4**

| Item | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| At the production State of gel | ⓞ | ⓞ | ⓞ | ⓞ | ⓞ | ⓞ | ⓞ | ⓞ | ⓞ | ⓞ | ⓞ | ⓞ | ⓞ | ⓞ |
| Transparency | ○ | ⓞ | ⓞ | ⓞ | ⓞ | ⓞ | ⓞ | ⓞ | ⓞ | ○ | ⓞ | ⓞ | ○ | ⓞ |
| After storage Transparency | ○ | ⓞ | ⓞ | ⓞ | ⓞ | ⓞ | ⓞ | ⓞ | ⓞ | ○ | ⓞ | ⓞ | ○ | ⓞ |
| Syneresis | ⓞ | ⓞ | ⓞ | ⓞ | ⓞ | ⓞ | ⓞ | ⓞ | ⓞ | ⓞ | ⓞ | ⓞ | ⓞ | ⓞ |
| Gel shrinkage | ⓞ | ⓞ | ⓞ | ⓞ | ⓞ | ⓞ | ⓞ | ⓞ | ⓞ | ⓞ | ⓞ | ⓞ | ⓞ | ⓞ |

**Table 5**

| Item | Comparative Example | | | | | | |
|---|---|---|---|---|---|---|---|
| | 1 | 2 | 3 | 4 | 5 | 6 | 7 |
| At the production State of gel | Δ | ⓞ | ⓞ | × | ○ | Δ | ○ |
| Transparency | - | ○ | Δ | - | × | Δ | ○ |
| After storage Transparency | - | ○ | Δ | - | × | - | Δ |
| Syneresis | - | Δ | Δ | - | Δ | - | Δ |
| Gel shrinkage | - | ○ | ○ | - | Δ | - | Δ |

## Claims

1. A slow-release gel composition for a volatile substance, comprising a volatile substance, a poly-N-vinylcarboxylic acid amide-base cross-linked resin, a surfactant and water.

2. A slow-release gel composition for a volatile substance as claimed in Claim 1, which contains an alcohol.

3. A slow-release gel composition for a volatile substance as claimed in Claim 1 or 2, wherein said poly-N-vinylcarboxylic acid amide-base cross-linked resin is selected from the group consisting of poly-N-vinylformamide-base cross-linked resins, poly-N-vinylacetamide-base cross-linked resins, poly-N-vinyl-N-methylacetamide-base cross-linked resins and poly-N-vinyl-α-pyrrolidone-base cross-linked resins.

4. A slow-release gel composition for a volatile substance as claimed in Claim 3, wherein said poly-N-vinylcarboxylic acid amide-base cross-linked resin is a poly-N-vinylacetamide-base cross-linked resin.

5. A slow-release gel composition for a volatile substance as claimed in Claim 4, wherein said poly-N-vinylcarboxylic acid amide-base cross-linked resin is a cross-linked N-vinylacetamide homopolymer.

6. A slow-release gel composition for a volatile substance as claimed in any of the Claims 1 to 5, wherein said volatile substance is selected from the group consisting of perfumes, deodorants, insectifuges, pesticides and repellents.

7. A slow-release gel composition for a volatile substance as claimed in any of the Claims 1 to 6, which comprises from 0.1 to 40% by weight of a volatile substance, from 1 to 10% by weight of a poly-N-vinylcarboxylic acid amide base cross-linked resin, from 0.1 to 15% by weight of a surfactant, from 15 to 98.8% by weight of water and from 0 to 60% by weight of an alcohol.

## Patentansprüche

1. Gelzusammensetzung mit langsamer Freisetzung für eine flüchtige Substanz, welche eine flüchtige Substanz, ein vernetztes Harz auf der Grundlage eines Poly-N-vinylcarbonsäureamids, ein oberflächenaktives Mittel und Wasser enthält.

2. Gelzusammensetzung mit langsamer Freisetzung für eine flüchtige Substanz nach Anspruch 1, welche einen Alkohol enthält.

3. Gelzusammensetzung mit langsamer Freisetzung für eine flüchtige Substanz nach Anspruch 1 oder 2, wobei das vernetzte Harz auf der Grundlage eines Poly-N-vinylcarbonsäureamids aus der Gruppe ausgewählt ist, die aus vernetzten Harzen auf der Grundlage von Poly-N-vinylformamid, vernetzten Harzen auf der Grundlage von Poly-N-vinylacetamid, vernetzten Harzen auf der Grundlage von Poly-N-vinyl-N-methylacetamid und vernetzten Harzen auf der Grundlage von Poly-N-vinyl-α-pyrrolidon besteht.

4. Geizusammensetzung mit langsamer Freisetzung für eine flüchtige Substanz nach Anspruch 3, wobei das vernetzte Harz auf Grundlage eines Poly-N-vinylcarbonsäureamids ein vernetztes Harz auf Grundlage von Poly-N-vinylacetamid ist.

5. Gelzusammensetzung mit langsamer Freisetzung für eine flüchtige Substanz nach Anspruch 4, wobei das vernetzte Harz auf Grundlage von Poly-N-vinylcarbonsäureamid ein vernetztes N-Vinylacetamidhomopolymer ist.

6. Gelzusammensetzung mit langsamer Freisetzung für eine flüchtige Substanz nach einem der Ansprüche 1 bis 5, wobei die flüchtige Substanz aus der Gruppe ausgewählt ist, die aus Parfums, Deodorants, Insektenschutzmitteln, Pestiziden und Abwehrmitteln besteht.

7. Gelzusammensetzung mit langsamer Freisetzung für eine flüchtige Substanz nach einem der Ansprüche 1 bis 6, welche 0,1 bis 40 Gew.-Teile einer flüchtigen Substanz, 1 bis 10 Gew.-Teile eines vernetzten Harzes auf der Grundlage von Poly-N-vinylcarbonsäure, 0,1 bis 15 Gew.-Teile eines oberflächenaktiven Mittels, 15 bis 98,8 Gew.-Teile Wasser und 0 bis 60 Gew.-Teile eines Alkohols enthält.

## Revendications

1. Composition de gel à libération lente pour une substance volatile, comprenant une substance volatile, une résine réticulée à base d'amide d'acide poly-N-vinylcarboxylique, un tensioactif et de l'eau.

2. Composition de gel à libération lente pour une substance volatile selon la revendication 1, qui contient un alcool.

3. Composition de gel à libération lente pour une substance volatile selon la revendication 1 ou 2, dans laquelle ladite résine réticulée à base d'amide d'acide poly-N-vinylcarboxylique est choisie dans le groupe comprenant des résines réticulées à base de poly-N-vinylformamide, des résines réticulées à base de poly-N-vinylacétamide, des résines réticulées à base de poly-N-vinyl-N-méthylacétamide et des résines réticulées à base de poly-N-vinyl-α-pyrrolidone.

4. Composition de gel à libération lente pour une substance volatile selon la revendication 3, dans laquelle ladite résine réticulée à base d'amide d'acide poly-N-vinylcarboxylique est une résine réticulée à base de poly-N-vinylacétamide.

5. Composition de gel à libération lente pour une substance volatile selon la revendication 4, dans laquelle ladite résine réticulée à base d'amide d'acide poly-N-vinylcarboxylique est un homopolymère N-vinylacétamide réticulé.

6. Composition de gel à libération lente pour une substance volatile selon l'une quelconque des revendications 1 à 5, dans laquelle ladite substance volatile est choisie dans le groupe comprenant des parfums, des déodorants, des insecticides, des pesticides et des répulsifs.

7. Composition de gel à libération lente pour une substance volatile selon l'une quelconque des revendications 1 à 6, laquelle comprend de 0,1 à 40% en poids d'une substance volatile, de 1 à 10% en poids d'une résine réticulée à base d'amide d'acide poly-N-vinylcarboxylique, de 0,1 à 15% en poids d'un tensioactif, de 15 à 98,8% en poids d'eau et de 0 à 60% en poids d'un alcool.
